# EUROPÄISCHE PATENTSCHRIFT

(11) **EP 0 311 992 B1**
(45) Veröffentlichungstag und Bekanntmachung des Hinweises auf die Patenterteilung: **07.07.1993**
(21) Anmeldenummer: 88116890.0
(22) Anmeldetag: 11.10.1988
(51) Int. Cl.: F01N 3/28, F01N 3/02

(54) **Verfahren und Vorrichtung zur Russoxidation in Dieselmotoren**
Method and device for soot oxidation in diesel engines
Procédé et dispositif pour l'oxydation de la suie dans les moteurs diesel

(30) Priorität: 16.10.1987 DE 3735084
(43) Veröffentlichungstag der Anmeldung: 19.04.1989
(73) Patentinhaber: Atlas Fahrzeugtechnik GmbH, D-58791 Werdohl (DE)
(72) Erfinder: Brandner, Burkhard, D-5980 Werdohl (DE); Schilly, Helmut, D-5275 Bergneustadt (DE); Greulich, Klaus R., Dr.-Ing., D-5357 Swisttal-Heimerzheim (DE); Heintzen, Dirk, D-5992 Nachrodt-Wirblingwerde (DE)
(74) Vertreter: Hassler, Werner, Dr.

(56) Entgegenhaltungen:
- EP-A- 0 158 625
- DE-A- 1 921 024
- DE-A- 2 951 621
- FR-A- 1 333 941
- FR-A- 2 136 872
- FR-A- 2 280 039
- GB-A- 2 161 397
- US-A- 4 345 431
- PATENT ABSTRACTS OF JAPAN, Band 9, Nr. 238 (M-416)[1961], 25. September 1985;& JP-A-60 93 110 (MATSUSHITA DENKI SANGYO K.K.) 24-05-1985
- PATENT ABSTRACTS OF JAPAN, Band 7, Nr. 47 (M-196)[1192], 24. Februar 1983;& JP-A-57 196 013 (BABCOCK HITACHI K.K.) 01-12-1982

## Beschreibung

Die Erfindung betrifft ein Verfahren nach dem Oberbegriff des Anspruchs 1 und eine Vorrichtung nach dem Oberbegriff des Anspruchs 5.

Die EP-A-0 158 625 beschreibt ein Verfahren dieser Art für einen Verbrennungsmotor. Dort wird dem Abgas sowohl vor als auch nach der katalytischen Reinigung Wärme entzogen, um die optimale Katalysatortemperatur zu erhalten. Der jeweilige Wärmeentzug wird entsprechend den Fahrzuständen gesteuert. Bei Dieselmotoren hat das Abgas in manchen Fahrzuständen eine zu niedrige Temperatur, um ein Rußoxidation zuzulassen. Infolgedessen ist dieses bekannte Verfahren zur Rußoxidation bei Dieselmotoren nicht geeignet. Ein ähnliches Verfahren ist aus der JP-A-60 93 110 bekannt.

Ein Dieselmotor produziert erhebliche Rußmengen. Für den Gehalt dieser Rußmengen im Abgas bestehen bekanntlich Vorschriften. Es ist zu erwarten, daß diese Vorschriften aus Umweltgründen immer strenger werden, so daß die zulässigen Rußwerte im Abgas noch weiter abgesenkt werden müssen.

Das Ausscheiden von Ruß erfolgt mit Hilfe mechanischer Filter, die entweder ein Drahtgeflecht oder eine keramische Struktur enthalten. An diesen Filtern scheiden sich Rußpartikel ab. Das Problem dieser Filter ist die Reinigung, da die Rußpartikel das Filter allmählich zusetzen, so daß der Abgasgegendruck unzulässig hohe Werte annimmt.

Ein einfaches Verbrennen der Rußpartikel ist erst bei Temperaturen oberhalb 650 °C möglich. Die Abgastemperatur eines Dieselmotors erreicht nur in bestimmten Fahrzuständen diesen Wert. In vielen Fahrzuständen beträgt die Abgastemperatur nur 200 °C und liegt also wesentlich unter der Verbrennungstemperatur der Rußpartikel. Infolgedessen ist dieser einfache Weg nicht möglich.

Es ist bereits bekannt, die Verbrennungstemperatur der Rußteilchen durch Einspritzen von Oxidationsmitteln herabzusetzen. Hierbei kann die Verbrennungstemperatur auf Werte unter 300 °C gesenkt werden. Jedoch auch dann gibt es noch Fahrzustände, in denen die Abgastemperatur niedriger ist. Außerdem erzeugen die Oxidattionshilfsmittel umweltschädliche Rückstände, insbesondere Schwermetallrückstände, so daß dieses Verfahren keine wirksame Abhilfe verspricht.

Bekannt ist auch das Aufheizen der Abgase durch Brenner. Dieses Verfahren ist sehr energieaufwendig.

Aufgabe der Erfindung ist die Sicherstellung einer vollständigen und kontinuierliche Rußoxidation im Abgas eines Dieselmotors bei allen Fahrzuständen.

Diese Aufgabe wird nach der Erfindung durch die kennzeichnenden Merkmale der Ansprüche 1 und 5 gelöst.

Dieses Verfahren unterscheidet sich insofern vom Stand der Technik, als die dem Abgas entnommene Wärme auf ein höheres Niveau gebracht und dem Abgas vor der Oxidation zugeführt wird, um so die Abgastemperatur auf einen optimalen Oxidationswert zu erhöhen.

Ein Kreislauf des Transportgases wird dadurch ermöglicht, daß dem Transportgas nach der Wärmeabgabe Energie durch Entspannung entzogen wird. Die bei der Enspannung freiwerdende Energie liefert einen Teil der für die Verdichtung notwendigen Energie.

Ein geschlossener Kreislauf wird dadurch ermöglicht, daß das entpannte Transportgas in den Kreislauf zurückgeführt wird.

Die Temperaturführung des katalytischen Prozesses wird dadurch verbessert, daß zeitweise Luft als Transportgas unmittelbar aus der Atmosphäre angesaugt und verdichtet wird und nach einer Wärmeaufnahme aus dem Abgasstrom vor dem Ort der katalytischen Reaktion - insbesondere hinter der Strömungsmaschine zur Entspannung des Transportgases freigesetzt wird. Dadurch läßt sich insbesondere eine Überhitzung des Katalysators ausschließen, indem bei hoher Abgastemperatur kalte atmosphärische Luft in den Kreislauf eingeleitet wird.

Eine Vorrichtung nach der Erfindung zeichnet sich durch die kennzeichnenden Merkmale des Anspruchs 5 aus.

Diese Vorrichtung unterscheidet sich insofern vom Stand der Technik, als das Abgas durch einen Wärmerückgewinnungsprozeß vor dem Reak tor auf die katalytisch erniedrigte Rußoxidationstemperatur erhitzt wird. Der Wärmerückgewinnungsprozeß sieht vor, daß ein Transportgas im Anschluß an den Reaktor Wärme aus dem Abgas entnimmt. Dieses Transportgas wird verdichtet, so daß seine Enthalpie erhöht wird. Das komprimierte Transportgas gibt in einem Wärmetauscher Wärme an das relativ kalte Abgas, das aus dem Motor kommt, ab, so daß dieses Abgas auf die Reaktonstemperatur für die Oxidation erwärmt wird. Das abgekühlte Transportgas wird in einer Expansionsvorrichtung entspannt und in den Kreislauf zurückgeführt. Dieser Kreislauf des Transportgases erfordert nur eine geringe mechanische Energie, da die Entspannungsvorrichtung weitgehend die für den Kompressor erforderliche Energie liefert. Die zusätzliche Restenergie kann von einer Strömungsmaschine mit Bypass im Abgasstrom bereitgestellt werden.

Die Einwirkung des katalytischen Werkstoffs wird dadurch sichergestellt, daß der katalytische Werkstoff als Beschichtung auf den Reaktorkörper aufgetragen ist.

Die Halterung des katalytischen Werkstoffs ist dadurch verbessert, daß der katalytische Werkstoff in oder auf einem Trägerwerkstoff vorgesehen ist.

Zur Einleitung der Rußverbrennung beim Kaltstart oder im Anfahrbetrieb ist vorgesehen, daß vor dem Reaktor eine zusätzliche Brennereinrichtung zur Erhitzung des Abgases angeordnet ist.

Im Rahmen der Erfinding ist auch vorgesehen, daß eine bereits vorhandene, motorunabhängige Heizeinrichtung zusätzlich zur Erwärmung des Abgasstromes vorgesehen ist. Dadurch kann die vorhandene Brennereinrichtung, z.B. eine Fremdheizung zusätzlich genutzt werden. Eine gesonderte Brennereinrichtung könnte eingespart werden.

Eine andere Einleitung der Verbrennung ist dadurch möglich, daß ein chemischer Wärmespeicher vor dem Reaktor mit dem Abgasstrom gekoppelt ist.

Zur Abtrennung störender Partikel aus dem Abgasstrom sieht die Erfindung vor, daß zwischen dem Wärmetauscher und dem Reaktor im Abgasstrom ein oder mehrere Siebe unterschiedlicher Maschenweite und mit katalytischer Beschichtung angeordnet sind. Hier erfolgt auch eine Voroxidation, insbesondere großer Rußteilchen. Hierdurch wird die Wirkung der Vorrichtung verbessert.

Eine hohe Oxidationswirkung erzielt man dadurch, daß der Reaktor mit mindestens einem, innen wabenähnlich strukturierten Element aus metallischem Werkstoff gefüllt ist, das katalytisch beschichtet ist.

In anderer Weise ist vorgesehen, daß der Reaktor mit mindestens einem, innen wabenähnlich strukturierten Element aus nichtmetallischem Werkstoff gefüllt ist, das katalytisch beschichtet ist. Dieser nichtmetallische Werkstoff kann Keramik sein.

Eine große wirksame Oberfläche erzielt man dadurch, daß der Reaktor mit einer katalytisch beschichteten Wolle aus einem metallischen oder nichtmetallischen Werkstoff gefüllt ist.

Die Oxidationsstrecke für den Abgasstrom läßt sich dadurch vergroßern, daß mindestens ein Wärmetauscher auf der abgasführenden Seite katalytisch beschichtet ist.

Die Lebensdauer der Vorrchtung ist dadurch erhöht, daß die katalytische Beschichtung aus Edelmetallen besteht.

Eine andere Lösung sieht vor, daß die katalytische Beschichtung aus seltenen Erdmetallen besteht.

Einen hohen katalytischen Wirkungsgrad erzielt man dadurch, daß die inneren Strukturen des Reaktors Bauteile oder Deformierungen zur Erhöhung der Turbulenz des Abgasstromes aufweisen. Innerhalb der turbulenten Agbasströmung wird die katalytische Wirkung infolge der erhöhten Kontaktierungsmöglichkeit erhöht.

Der Wärmehaushalt der Vorrichtung wird dadurch verbessert, daß der Reaktor gegen die Umgebung wärmeisoliert ist.

Eine weitere Verbesserung erzielt man dadurch, daß der Reaktorkörper gegen das Gehäuse des Reaktors wärmeisoliert ist.

Wärmeverluste lassen sich weiter dadurch verringern, daß die Wärmetauscher gegen die Umgebung wärmeisoliert sind.

Eine weitere Verringerung der Wärmeverluste erzielt man dadurch, daß inneren Strukturen der Wärmetauscher gegen das Gehäuse wärmeisoliert sind.

Der Wärmeaustausch wird dadurch intensiviert, daß in die Wärmetauscher strömungsgrenzschichtablösende Strukturen eingebaut sind. So erzielt man einen turbulenten Abgasstrom auch innerhalb der Wärmetauscher und damit einen intensivereren Wärmeaustausch.

Ein Erfindungsvorschlag sieht vor, daß die Wärmetauscher als Gegenstromwärmetauscher ausgeführt sind.

Zur Vergrößerung der Wärmeaustauschfläche ist vorgsehen, daß die Wärmetauscher als Micro-Strukturwärmetauscher ausgebildet sind.

Zusätzliche Möglichkeiten zur Steuerung des Wärmehaushalts der Vorrichtung erhält man dadurch, daß in die Rohrleitungen je ein Ventil eingebaut ist, das eine Öffnung des Kreislaufs des Transportgases zur Umgebung ermöglicht. Man kann so in bestimmten Betriebzustände, insbesondere bei hoher Abgastemperatur, kalte Luft in den Kreislauf einleiten, um einen Kühleffekt zu bewirken. So lassen sich Schädigungen des Katalysator vermeiden.

Eine wirksame Energierückgewinnung bei der Enspannnung ist dadurch sichergestellt, daß die Expansionsvorrichtung als Strömungsmaschine ausgebildet ist.

Die Zusatzenergie für die Verdichtung läßt sich dadurch bereitstellen, daß im Abgasrohr eine Strömungsmaschine mit einem geregelten Bypass, die dem Abgasstrom Antriebsenergie für den Kompressor entnimmt, angeordnet ist. Über den Bypass läßt sich in üblicher Weise die Leistungsaufnahme der Strömungsmaschine steuern.

Eine umfassende Regelung ist dadurch möglich, daß die Regelung des Bypass sowohl von Betriebszustandgrößen des Abgasstromes als auch von denen des Tranportgases abhängig ist.

Geringe Energieverluste lassen sich dadurch sicherstellen, daß Kompressor, Strömungsmaschine und Expansionsvorrichtung mit einer geeinsamen Welle koppelbar sind.

Zur schadlosen Ableitung der erhitzten Frischluft ist vorgesehen, daß das Ventil, das im Anschluß an die Expansionsvorrichtung angeordnet ist, mit dem Abgasrohr über eine Rohrleitung verbunden ist.

Eine umfangreiche Steuerung ist dadurch möglich, daß zur Steuersignalgewinnung Thermoelemente, Drucksensoren und/oder andere Sensoren vorgesehen sind. Die Steuerung der Oxidationsvorrichtung kann mit der Motorsteuerung verbunden oder in dieselbe integriert sein. Es sind vonseiten der Oxidationsvorrichtung Steuereingriffe in die Motorsteuerung möglich und umgekehrt. Man kann etwa bei absinkender Abgastemperatur die Motorleistung erhöhen, um so ungünstige Abgastemperaturen auszuschalten.

Es sind unterschiedliche Ansteuerungen der Ventile dadurch möglich, daß eine elektrische, mechanische, pneumatische oder hydraulische Betätigung der Ventile und des Bypass-Ventils der Strömungsmaschine vorgesehen ist.

Geringe Wärmeverluste erreicht man dadurch, daß die gesamte Vorrichtung isoliert in ein Gehäuse aus metallischem oder nichtmetallischem Werkstoff eingebaut ist.

Eine weitere Verbesserung des Betriebsverhaltens erreicht man dadurch, die Steuer/Regeleinrichtung Ausgangsgrößen zur Regelung des Antriebsmotors liefert. So kann man auch in instationären Betriebszuständen eine optimale Oxidation sicherstellen.

Ausführungsformen der Erfindung werden im folgenden unter Bezugnahme auf die anliegenden Zeichnungen erläutert, in denen darstellen:

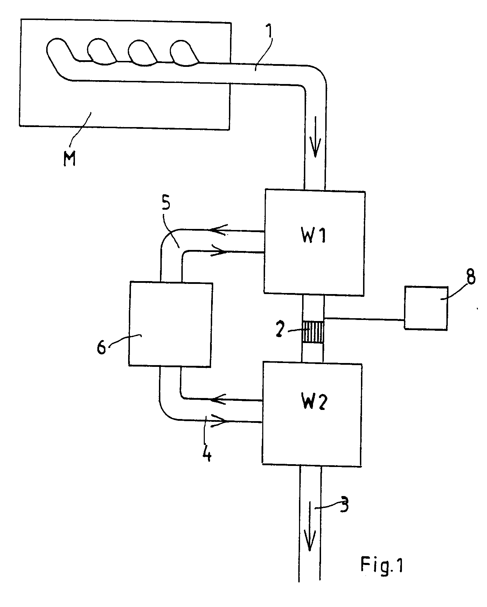

- Fig. 1: eine Schemazeichnung einer ersten Ausführungsform der Erfindung,
- Fig. 2: eine Schemazeichnung einer erweiterten Ausführungsform der Erfindung und
- Fig. 3: einen schematischen Schnitt durch den Reaktor.

In der Zeichnung ist die Abgassammelleitung 1 eines Dieselmotors M dargestellt. Bei einem Motor mit einer großen Zylinderzahl können auch mehrere Abgassammelleitungen vorhanden sein, die dann jeweils mit einer Rußoxidationsvorrichtung bestückt werden. In die Abgassammelleitung ist ein erster Wärmetauscher W1 eingebaut. An denselben schließt sich ein Reaktor 2 zur Rußoxidation an. Sodann folgt ein zweiter Wärmetauscher W2, von dem die Abgase in einer Leitung 3 abgeführt werden.

Der Reaktor 2 enthält einen katalytischen Werkstoff, der als Schicht auf dem Reaktorkörper aufgebracht und gegebenenfalls mit einer Trägersubstanz vermischt ist. Der katalytische Werkstoff bewirkt eine Senkung der Verbrennungstemperatur des Rußes auf einen wert von etwa 300° C oder noch weniger.

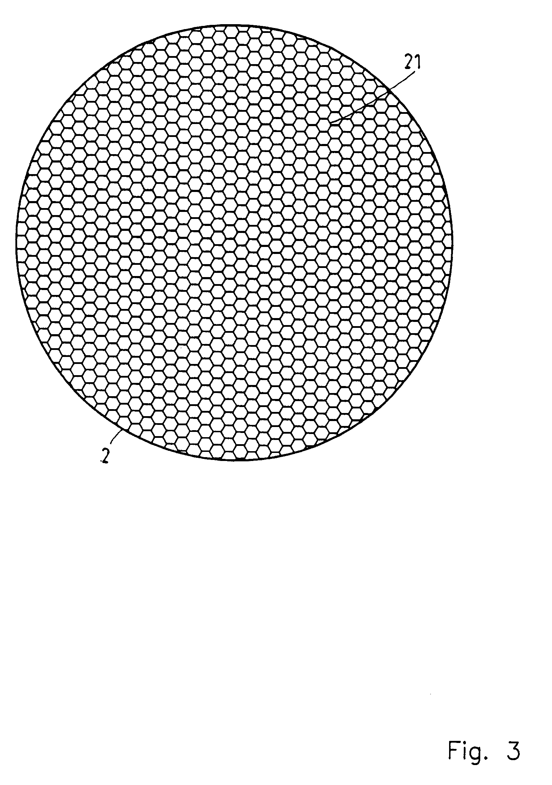

Im Einzelnen zeigt Fig. 3 einen Schnitt durch den Reaktor 2. Man erkennt die wabenförmige Struktur des Reaktorkörpers 21. Es kann sich um eine metallische, nichtmetallische, insbesondere keramische, eine geordnete oder mehr oder weniger ungeordnete Struktur handeln. Diese Struktur ist mit dem Katalysator beschichtet, oder der Katalysator ist in diese Struktur eingearbeitet. Die Struktur hat eine solche Konfiguration, daß sie grenzschichtablösend auf den Abgasstrom wirkt.

Die Wärmetauscher W1 und W2 sind über Leitungen 4, 5 und eine Fördervorrichtung 6 miteinander verbunden. Die Fördervorrichtung enthält normalerweise einen Kompressor und eine Expansionsvorrichtung. Die Expansionvorrichtung kann als Turbine ausgebildet sein und mit dem Kompressor auf einer gemeinsamen, von einer Abgasturbine oder einem Motor angetriebenen Welle sitzen.

Um den Oxidationssprozeß auch in einem kalten Betriebszustand, insbesondere beim Start einleiten zu können, ist eine zusätzliche Brennereinrichtung 8 vorgesehen. Als Brennereinrichtung läßt sich auch eine für andere Zwecke vorhande Heizeinrichtung, etwa eine Fremdheizung, vorsehen. Man kann auch einen chemischen Wärmespeicher 14 bereitstellen. Damit kann der Oxidationsprozeß in jedem Fall eingeleitet werden.

Betrachtet man die Temperaturverhältnisse ohne Wärmetauscher im Teillastbetrieb des Dieselmotors, so stehen am Ausgang der Abgassammelleitung 1 etwa 200 °C an. Diese Temperatur sinkt durch Strahlungsverluste und dergleichen bis zur Leitung 3 auf etwa 180 °C ab. Damit eine kontinuierliche Rußoxidation möglich ist. muß jedoch die Temperatur im Bereich des Reaktors etwa 300 °C betragen.

Durch den Wärmetauscher W2 ist es möglich, dem Abgas so viel Wärme zu entziehen, daß die Temperatur in der Leitung 3 auf etwa 160 °C absinkt. Das Austauschmedium bzw. Transportgas wird dann durch adiabatische Kompression soweit erhitzt, daß der Wärmetauscher W1 die Temperatur des Abgases auf einen Wert von etwa 350 °C anhebt. Damit kann die Oxidation sicher anspringen.

Das Transportgas muß in Rücklauf entspannt werden, was zweckmäßigerweise über eine Turbine erfolgt, die mit dem Kompressor gekoppelt ist. Infolgedessen kann die Antriebsleistung für den Kompressor klein gehalten werden.

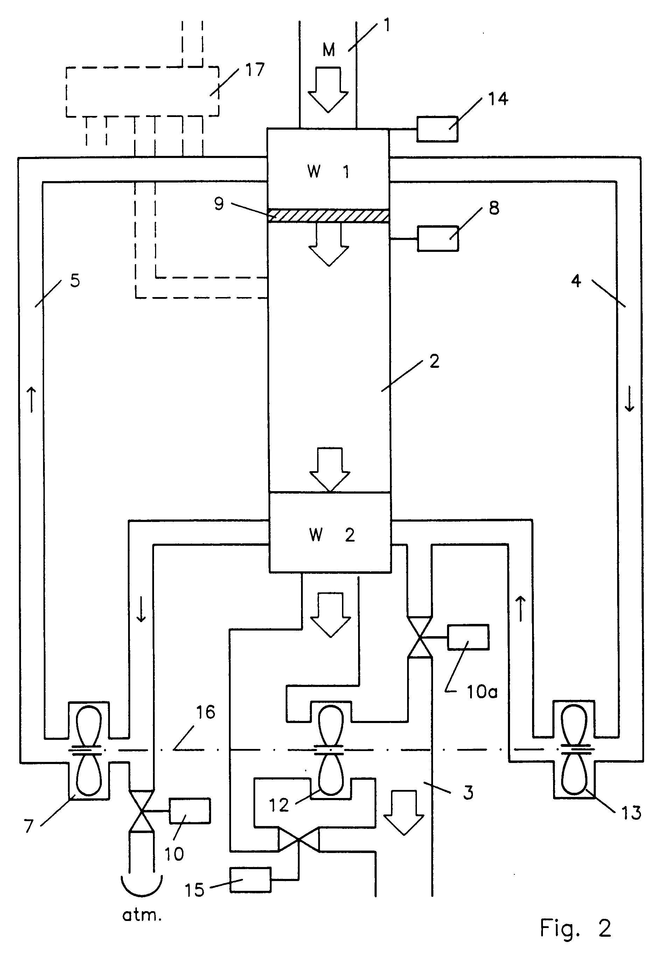

Fig. 2 zeigt eine abgewandelte Ausführungsform der Erfindung. Zwischen dem Wärmetauscher W1 und dem Reaktor 2 ist ein katalytisch beschichtetes Sieb 9 zur Voroxidation der größten vorkommenden Rußpartikel angeordnet. Durch die Maschenweite des Siebes 9 kann die Größe der in den Reaktor gelangenden Rußpartikel so festgelegt werden, daß diese Partikel auf dem Weg durch den Reaktor vollständig oxidiert weren. Zudem können an dieser Stell Partikel wie größere Metallabriebe festgehalten werden, die für den Reaktor schädlich sind. Im Rahmen der normalen Fahrzeuginspektion kann dieses Sieb gereinigt werden.

In der Zeichnung ist im einzelnen der Kompressor 7 und eine Entspannungsturbine 13 dargestellt. Im Anschluß an die Entspannungsturbine 13 is ein Ventil 10a vorgesehen, das in die Atmosphäre mündet oder das über eine Leitung mit der Abgasleitung 3 verbunden ist. Ein Ventil 10 befindet sich auf der Eintrittsseite des Kompressors 7 und ermöglicht ebenfalls eine Öffnung des Kreislaufes zur Atmosphäre. Innerhalb der Abgasleitung 3 befindet sich eine Strömungsmaschine 12 mit Bypass 15. Der Kompressor 7, die Strömungsmaschine 12 und die Expansionsvorrichtung 13 können auf einer gemeinsamen Welle 16 angeordnet oder in anderer Weise gekoppelt sein. So kann die in der Expansionsvorrichtung 13 freiwerdende mechanische Energie unmittelbar zum Antrieb des Kompressors 7 verwendet werden. Lediglich die notwendige Zusatzenergie wird von der Strömungsmaschine 12 bereitgestellt.

Eine Steuer/Regeleinrichtung 17 erhält von Sonden für Temperatur, Druck und andere Betriebsparameter Eingangssignale. Diese Steuer/Regeleinrichtung dient zur Steuerung der Oxidationsvorrichtung. Sie kann aber auch Steuersignale an die Motorsteuerung abgeben. So kann der Motor in Abhängigkeit von dem Zusatnd der Oxidationsvorrichtung gesteuert werden. Man kann etwa die Motorleistung ändern, um eine optimale Abgastemperatur sicherzustellen.

Wenn in bestimmten Fahrzuständen übermäßig heiße Abgase auftreten, kann durch das Ventil 10 kalte atmosphärische Luft eingeleitet werden. So kann der Kreislauf zur Kühlung des Abgasstromes genutzt werden. Die erwärmte Luft wird nach der Expansion über das Ventil 10a abgelassen. Die Rückführung in die Abgasleitung 3 schließt störende Einwirkungen dieser erwärmten Luft aus. Die Ventile 10 und 10a können in Abhängigkeit von dem jeweiligen Betriebzustand gesteuert werden.

## Patentansprüche

1. Verfahren zur Reinigung der Abgase von Verbrennungsmotoren, wonach das Abgas kontinuierlich katalytisch gereinigt wird und auf der Eintrittsseite und der Austrittsseite des Katalysators ein Wärmeaustausch erfolgt, dadurch gekennzeichnet, daß zur Rußoxidation der Abgase von Dieselmotoren im Anschluß an die katalytische Oxidation vom Abgasstrom Wärme auf ein Transportgas übertragen wird, daß die Enthalpie des Transportgases durch Verdichtung erhöht wird und daß das Transportgas vor dem Ort der katalytischen Oxidation Wärme an den Abgasstrom abgibt.

2. Verfahren nach Anspruch 1, dadurch gekennzeichnet, daß dem Transportgas nach der Wärmeabgabe Energie durch Entspannung entzogen wird.

3. Verfahren nach Anspruch 2, dadurch gekennzeichnet, daß das entspannte Transportgas in den Kreislauf zurückgeführt wird.

4. Verfahren nach einem der Ansprüche 1 bis 3, dadurch gekennzeichnet, daß zeitweise Luft als Transportgas unmittelbar aus der Atmosphäre angesaugt und verdichtet wird und nach einer Wärmeaufnahme aus dem Abgasstrom vor dem Ort der katalytischen Reaktion - insbesondere hinter der Strömungsmaschine zur Entspannung des Transportgases - freigesetzt wird.

5. Vorrichtung zur Durchführung des Verfahrens nach einem der Ansprüche 1 bis 4 mit einem einen katalytischen Werkstoff enthaltenden Reaktor im Abgaszweig und mit je einem Wärmetauscher auf der Eintrittsseite und auf der Austrittsseite des Reaktors, dadurch gekennzeichnet, daß der Wärmetauscher (W2) auf der Austrittsseite im Sinne eines Wärmeentzugs aus dem Abgas ausgebildet ist, daß ein Kompressor (7) zur adiabatischen Kompression des Transportgases vorgesehen ist, daß der Wärmetauscher (W1) auf der Eintrittsseite im Sinne einer Abgabe von Wärmeenergie des komprimierten Transportgases an das Abgas ausgebildet ist und daß eine Expansionsvorrichtung (13) zur Expansion des komprimierten Transportgases hinter dem Wärmetauscher (W1) auf der Eintritts seite vorgesehen ist.

6. Vorrichtung nach Anspruch 5, dadurch gekennzeichnet, daß der katalytische Werkstoff als Beschichtung auf den Reaktorkörper aufgebracht ist.

7. Vorrichtung nach Anspruch 5 oder 6, dadurch gekennzeichnet, daß der katalytische Werkstoff in oder auf einem Trägerwerkstoff vorgesehen ist.

8. Vorrichtung nach einem der Ansprüche 5 bis 7, dadurch gekennzeichnet, daß vor dem Reaktor (2) eine zusätzliche Brennereinrichtung (8) zur Erhitzung des Abgases angeordnet ist.

9. Vorrichtung nach Anspruch 8, dadurch gekennzeichnet, daß eine bereits vorhandene, motorunabhängige Heizeinrichtung zusätzlich zur Erwärmung des Abgasstromes vorgesehen ist.

10. Vorrichtung nach einem der Ansprüche 5 bis 9, dadurch gekennzeichnet, daß ein chemischer Wärmespeicher (14) vor dem Reaktor mit dem Abgasstrom gekoppelt ist.

11. Vorrichtung nach einem der Ansprüche 5 bis 10, dadurch gekennezichnet, daß zwischen dem Wärmetauscher (W1) und dem Reaktor (2) im Abgasstrom ein oder mehrere Siebe (9) unterschiedlicher Maschenweite und mit katalytischer Beschichtung angeordnet sind.

12. Vorrchtung nach einem der Ansrpüche 5 bis 11, dadurch gekennzeichnet, daß der Reaktor (2) mit mindestens einem, innen wabenähnlich strukturierten Element aus metallischem Werkstoff gefüllt ist, das katalytisch beschichtet ist.

13. Vorrichtung nach einem der Ansprüche 5 bis 12, dadurch gekennzeichnet, daß der Reaktor (2) mit mindestens einem, innen wabenähnlich strukturierten Element aus nichtmetallischem Werkstoff gefüllt ist, das katalytisch beschichtet ist.

14. Vorrichtung nach einem der Ansprüche 5 bis 12, dadurch gekennzeichnet, daß der Reaktor (2) mit einer katalytisch beschichteten Wolle aus einem metallischen oder nichtmetallischen Werkstoff gefüllt ist.

15. Vorrichtung nach einem der Ansprüche 5 bis 14, dadurch gekennzeichnet, daß mindestens ein Wärmetauscher (W1 oder W2) auf der abgasführenden Seite katalytisch beschichtet ist.

16. Vorrichtung nach einem der Ansprüche 5 bis 15, dadurch gekennzeichnet, daß die katalytische Beschichtung aus Edelmetallen besteht.

17. Vorrichtung nach einem der Ansprüche 5 bis 15, dadurch gekennzeichnet, daß die katalytische Beschichtung aus seltenen Erdmetallen besteht.

18. Vorrichtung nach einem der Ansprüche 5 bis 17, dadurch gekennzeichnet, daß die inneren Strukturen des Reaktors Bauteile oder Deformierungen zur Erhöhung der Turbulenz des Abgasstromes aufweisen.

19. Vorrichtung nach einem der Ansprüche 5 bis 18, dadurch gekennzeichnet, daß der Reaktor (2) gegen die Umgebung wärmeisoliert ist.

20. Vorrichtung nach einem der Ansprüche 5 bis 19, dadurch gekennzeichnet, daß der Reaktorkörper gegen das Gehäuse des Reaktors wärmeisoliert ist.

21. Vorrichtung nach einem der Ansprüche 5 bis 20, dadurch gekennzeichnet, daß die Wärmetauscher gegen die Umgebung wärmeisoliert sind.

22. Vorrichtung nach einem der Ansprüche 5 bis 21, dadurch gekennzeichnet, daß inneren Strukturen der Wärmetauscher gegen das Gehäuse wärmeisoliert sind.

23. Vorrichtung nach einem der Ansprüche 5 bis 22, dadurch gekennzeichnet, daß in die Wärmetauscher strömungsgrenzschichtablösende Strukturen eingebaut sind.

24. Vorrichtung nach einem der Ansprüche 5 bis 23, dadurch gekennzeichnet, daß die Wärmetauscher (W1, W2) als Gegenstromwärmetauscher ausgeführt sind.

25. Vorrichtung nach einem der Ansprüche 5 bis 23, dadurch gekennzeichnet, daß die Wärmetauscher (W1, W2) als Micro-Strukturwärmetauscher ausgebildet sind.

26. Vorrichtung nach einem der Ansprüche 5 bis 25, dadurch gekennzeichnet, daß in die Rohrleitungen (4, 5) je ein Ventil (10, 10a) eingebaut ist, das eine Öffnung des Kreislaufs des Transportgases zur Umgebung ermöglicht.

27. Vorrichtung nach einem der Ansprüche 5 bis 26, dadurch gekennzeichnet, daß die Expansionsvorrichtung (13) als Strömungsmaschine ausgebildet ist.

28. Vorrichtung nach einem der Ansprüche 5 bis 27, dadurch gekennzeichnet, daß im Abgasrohr (3) eine Strömungsmaschine (12) mit einem geregelten Bypass (15), die dem Abgasstrom Antriebsenergie für den Kompressor (7) entnimmt, angeordnet ist.

29. Vorrichtung nach einem der Ansprüche 5 bis 27, dadurch gekennzeichnet, daß die Regelung des Bypass (15) sowohl von Betriebszustandgrößen des Abgasstromes als auch von denen des Tranportgases abhängig ist.

30. Vorrichtung nach einem der Ansprüche 5 bis 29, dadurch gekennzeichnet, daß Kompressor (7) Strömungsmaschine (12) und Expansionsvorrichtung (13) mit einer gemeinsamen Welle (16) koppelbar sind.

31. Vorrichtung nach einem der Ansprüche 5 bis 30, dadurch gekennzeichnet, daß das Ventil (10a), das im Anschluß an die Expansionsvorrichtung (13) angeordnet ist, mit dem Abgasrohr (3) über eine Rohrleitung verbunden ist.

32. Vorrichtung nach einem der Ansprüche 5 bis 20, dadurch gekennzeichnet, daß zur Steuersignalgewinnung Thermoelemente, Drucksensoren und/oder andere Sensoren vorgesehen sind.

33. Vorrichtung nach einem der Ansprüche 5 bis 32, dadurch gekennzeichnet, daß eine elektrische, mechanische, pneumatische oder hydraulische Betätigung der Ventile (10, 10a) und des Bypass-Ventils (15) der Strömungsmaschine (12) vorgesehen ist.

34. Vorrichtung nach einem der Ansprüche 5 bis 33, dadurch gekennzeichnet, daß die gesamte Vorrichtung isoliert in ein Gehäuse aus metallischem oder nichtmetallischem Werkstoff eingebaut ist.

35. Vorrichtung nach einem der Ansprüche 5 bis 34, dadurch gekennzeichnet, daß die Steuer/Regeleinrichtung (17) Ausgangsgrößen zur Regelung des Antriebsmotors leifert.

## Claims

1. Method of cleaning the exhaust gases of internal combustion engines, according to which the exhaust gas is continuously catalytically cleaned and a heat exchange is effected at the inlet side and the outlet side of the catalyst, characterized in that following the catalytic oxidation of the exhaust gas stream heat is transferred to a transport gas for the purpose of oxidizing soot in the exhaust gas of diesel engines, in that the enthalpy of the transport gas is increased by compression, and in that the transport gas releases heat to the exhaust gas stream upstream of the point at which the catalytic oxidation occurs.

2. Method according to Claim 1, characterized in that energy is removed by expansion from the transport gas after heat release.

3. Method according to Claim 2, characterized in that the expanded transport gas is returned to the cycle.

4. Method according to one of Claims 1 to 3, characterized in that air as transport gas is periodically drawn in directly from the atmosphere and is compressed, and after absorbing heat from the exhaust gas stream is released upstream of the point at which the catalytic reaction occurs - in particular downstream of the turbo machine for expanding the transport gas.

5. Apparatus for carrying out the method according to one of Claims 1 to 4, having a reactor in the exhaust gas branch containing a catalytic material, and having a respective heat exchanger on the inlet side and on the outlet side of the reactor, characterized in that the heat exchanger (W2) is constructed on the outlet side so as to remove heat from the exhaust gas, in that a compressor (7) is provided for the adiabatic compression of the transport gas, in that the heat exchanger (W1) on the inlet side is constructed so as to release heat energy of the compressed transport gas to the exhaust gas, and in that an expansion apparatus (13) is provided on the inlet side downstream of the heat exchanger (W1) for the expansion of the compressed transport gas.

6. Apparatus according to Claim 5, characterized in that the catalytic material is applied as a coating to the reactor body.

7. Apparatus according to Claim 5 or 6, characterized in that the catalytic material is provided in or on a carrier material.

8. Apparatus according to one of Claims 5 to 7, characterized in that an additional burner device (8) for heating the exhaust gas is arranged upstream of the reactor (2).

9. Apparatus according to Claim 8, characterized in that an already existing heating device, which is independent of the engine, is additionally provided for heating the exhaust gas stream.

10. Apparatus according to one of Claims 5 to 9, characterized in that a chemical heat store (14) is coupled to the exhaust gas stream upstream of the reactor.

11. Apparatus according to one of Claims 5 to 10, characterized in that one or more screens (9) of different mesh sizes and having catalytic coating are arranged in the exhaust gas stream between the heat exchanger (W1) and the reactor (2).

12. Apparatus according to one of Claims 5 to 11, characterized in that the reactor (2) is filled with at least one element which has internally a honeycomb-like structure, is of a metallic material and has a catalytic coating.

13. Apparatus according to one of claims 5 to 12, characterized in that the reactor (2) is filled with at least one element which has internally a honeycomb-like structure, is of non-metallic material and has a catalytic coating.

14. Apparatus according to one of claims 5 to 12, characterized in that the reactor (2) is filled with a wool of a metallic or non-metallic material which has a catalytic coating.

15. Apparatus according to one of claims 5 to 14, characterized in that at least one heat exchanger (W1 or W2) has a catalytic coating on the side over which the exhaust gas passes.

16. Apparatus according to one of claims 5 to 15, characterized in that the catalytic coating is of noble metals.

17. Apparatus according to one of claims 5 to 15, characterized in that the catalytic coating is of rare earth metals.

18. Apparatus according to one of claims 5 to 17, characterized in that the internal structures of the reactor have components or deformations for the purpose of increasing the turbulence of the exhaust gas stream.

19. Apparatus according to one of claims 5 to 18, characterized in that the reactor is thermally insulated with respect to the environment.

20. Apparatus according to one of claims 5 to 19, characterized in that the reactor body is thermally insulated with respect to the housing of the reactor.

21. Apparatus according to one of claims 5 to 20, characterized in that the heat exchangers are thermally insulated with respect to the environment.

22. Apparatus according to one of claims 5 to 21, characterized in that the internal structures of the heat exchangers are thermally insulated with respect to the housing.

23. Apparatus according to one of claims 5 to 22, characterized in that structures which break down the boundary layers of the flow are incorporated in the heat exchangers.

24. Apparatus according to one of claims 5 to 23, characterized in that the heat exchangers (W1, W2) are constructed as countercurrent heat exchangers.

25. Apparatus according to one of claims 5 to 23, characterized in that the heat exchangers (W1, W2) are constructed as microstructure heat exchangers.

26. Apparatus according to one of claims 5 to 25, characterized in that there is incorporated in the pipelines (4, 5) a respective valve (10, 10a) which enables the transport gas cycle to be opened to the environment.

27. Apparatus according to one of claims 5 to 26, characterized in that the expansion apparatus (13) is constructed as a turbo machine.

28. Apparatus according to one of claims 5 to 27, characterized in that there is arranged in the exhaust gas pipe (3) a turbo machine (12) having a regulated bypass (15) which draws driving energy for the compressor (7) from the exhaust gas stream.

29. Apparatus according to one of claims 5 to 27, characterized in that the regulation of the bypass (15) is dependent on operating state variables of both the exhaust gas stream and the transport gas.

30. Apparatus according to one of claims 5 to 29, characterized in that the compressor (7), the turbo machine (12) and the expansion apparatus (13) can be coupled to a common shaft (16).

31. Apparatus according to one of claims 5 to 30, characterized in that the valve (10a), which is arranged downstream of the expansion apparatus (13), is connected to the exhaust gas pipe (3) via a pipeline.

32. Apparatus according to one of claims 5 to 20, characterized in that thermoelements, pressure sensors and/or other sensors are provided for the purpose of obtaining control signals.

33. Apparatus according to one of claims 5 to 32, characterized in that there is provided an electrical, mechanical, pneumatic or hydraulic means of operating the valves (10, 10a) and the bypass valve (15) of the turbo machine (12).

34. Apparatus according to one of claims 5 to 33, characterized in that the entire apparatus is incorporated in an insulated manner in a housing of metallic or nonmetallic material.

35. Apparatus according to one of claims 5 to 34, characterized in that the control/regulating device (17) supplies output variables for regulating the drive motor.

## Revendications

1. Procédé d'épuration des gaz d'échappement de moteurs à combustion, dans lequel les gaz d'échappement sont purifiés de manière continue par voie catalytique et un échange thermique a lieu du côté entrée et du côté sortie du catalyseur, caractérisé en ce que, pour l'oxydation de la suie des gaz d'échappement de moteurs diesel, de la chaleur est transmise du courant de gaz d'échappement à un gaz de transport à la suite de l'oxydation catalytique, en ce que l'enthalpie du gaz de transport est augmentée par une compression et en ce que le gaz de transport cède de la chaleur au courant de gaz d'échappement en amont de l'endroit de l'oxydation catalytique.

2. Procédé suivant la revendication 1, caractérisé en ce que de l'énergie est prélevée au gaz de transport par détente après la cession de la chaleur.

3. Procédé suivant la revendication 2, caractérisé en ce que le gaz de transport détendu est ramené dans le circuit.

4. Procédé suivant l'une des revendications 1 à 3, caractérisé en ce que, par intervalles, de l'air en tant que gaz de transport est aspiré directement de l'atmosphère et est comprimé et, après une absorption de chaleur à partir du courant de gaz d'échappement en amont de l'endroit de la réaction catalytique, est libéré, en particulier en aval de la turbomachine destinée à la détente du gaz de transport.

5. Dispositif pour la mise en oeuvre du procédé suivant l'une des revendications 1 à 4, comprenant un réacteur contenant un matériau catalytique dans un embranchement à gaz d'échappement et un échangeur de chaleur du côté entrée et du côté sortie du reacteur, caractérisé en ce que l'échangeur de chaleur (W2) est réalisé du côté sortie dans le sens d'un prélèvement de chaleur à partir du gaz d'échappement, en ce qu'un compresseur (7) est prévu pour la compression adiabatique du gaz de transport, en ce que l'échangeur de chaleur (W1) est réalisé du côté entrée dans le sens d'une cession d'énergie thermique du gaz de transport comprimé au gaz d'échappement et en ce qu'un dispositif d'expansion (13) destiné à l'expansion du gaz de transport comprimé est prévu du côté sortie, derrière l'échangeur de chaleur (W1).

6. Dispositif suivant la revendication 5, caractérisé en ce que le matériau catalytique est appliqué sous la forme d'un revêtement sur le corps du réacteur.

7. Dispositif suivant l'une des revendications 5 et 6, caractérisé en ce que le matériau catalytique est prévu dans ou sur un matériau de support.

8. Dispositif suivant l'une des revendications 5 à 7, caractérisé en ce qu'un dispositif de brûleur supplémentaire (8) est agencé en amont du réacteur (2) pour le chauffage du gaz d'échappement.

9. Dispositif suivant la revendication 8, caractérisé en ce qu'un dispositif de chauffage déjà existant, indépendant du moteur, est prévu en supplément pour le chauffage du courant de gaz d'échappement.

10. Dispositif suivant l'une des revendications 5 à 9, caractérisé en ce qu'un accumulateur de chaleur chimique (14) est couplé en amont du réacteur au courant des gaz d'échappement.

11. Dispositif suivant l'une des revendications 5 à 10, caractérisé en ce qu'un ou plusieurs tamis (9) présentant différentes ouvertures de maille et un revêtement catalytique sont agencés entre l'échangeur de chaleur (W1) et le réacteur (2) dans le courant de gaz d'échappement.

12. Dispositif suivant l'une des revendications 5 à 11, caractérisé en ce que le réacteur (2) est rempli d'au moins un élément structuré à l'intérieur d'une manière analogue à un nid d'abeilles et en matériau métallique, cet élément étant revêtu de manière catalytique.

13. Dispositif suivant l'une des revendications 5 à 12, caractérisé en ce que le réacteur est rempli d'au moins un élément structuré à l'intérieur d'une manière analogue à un nid d'abeilles et à base d'un matériau non métallique, cet élément étant revêtu d'une manière catalytique.

14. Dispositif suivant l'une des revendications 5 à 12, caractérisé en ce que le réacteur (2) est rempli d'une laine en un matériau métallique ou non métallique qui est catalytiquement revêtue.

15. Dispositif suivant l'une des revendications 5 à 14, caractérisé en ce qu'au moins un échangeur de chaleur (W1 ou W2) est revêtu de manière catalytique du côté guidage des gaz d'échappement.

16. Dispositif suivant l'une des revendications 5 à 15, caractérisé en ce que le revêtement catalytique est constitué de métaux nobles.

17. Dispositif suivant l'une des revendications 5 à 15, caractérisé en ce que le revêtement catalytique est constitué de métaux des terres rares.

18. Dispositif suivant l'une des revendications 5 à 17, caractérisé en ce que les structures internes du réacteur présentent des éléments constitutifs ou des déformations destinés à augmenter la turbulence du courant de gaz d'échappement.

19. Dispositif suivant l'une des revendications 5 à 18, caractérisé en ce que le réacteur (2) est thermiquement isolé vis-à-vis de l'environnement.

20. Dispositif suivant l'une des revendications 5 à 19, caractérisé en ce que le corps de réacteur est thermiquement isolé vis-à-vis du logement du réacteur.

21. Dispositif suivant l'une des revendications 5 à 20, caractérisé en ce que les échangeurs de chaleur sont thermiquement isolés vis-à-vis de l'environnement.

22. Dispositif suivant l'une des revendications 5 à 21, caractérisé en ce que des structures internes des échangeurs de chaleur sont thermiquement isolées vis-à-vis du logement.

23. Dispositif suivant l'une des revendications 5 à 22, caractérisé en ce que des structures de décrochage de la couche limite de l'écoulement sont incorporées dans les échangeurs de chaleur.

24. Dispositif suivant l'une des revendications 5 à 23, caractérisé en ce que les échangeurs de chaleur (W1, W2) sont réalisés sous la forme d'échangeurs de chaleur en contre-courant.

25. Dispositif suivant l'une des revendications 5 à 23, caractérisé en ce que les échangeurs de chaleur (W1, W2) sont réalisés sous la forme d'échangeurs de chaleur à microstructure.

26. Dispositif suivant l'une des revendications 5 à 25, caractérisé en ce que dans chacun des conduits tubulaires (4, 5) est incorporée une vanne (10, 10a) qui permet une ouverture du circuit du gaz de transport vers l'environnement.

27. Dispositif suivant l'une des revendications 5 à 26, caractérisé en ce que le dispositif d'expansion (13) est réalisé sous la forme d'une turbomachine.

28. Dispositif suivant l'une des revendications 5 à 27, caractérisé en ce qu'une turbomachine (12), qui est pourvue d'une dérivation réglée (15) et qui prélève du courant de gaz d'échappement une énergie d'entraînement pour le compresseur (7), est agencée dans le tuyau à gaz d'échappement (3).

29. Dispositif suivant l'une des revendications 5 à 27, caractérisé en ce que le réglage de la dérivation (15) est fonction non seulement des grandeurs du régime du courant du gaz d'échappement mais aussi de celles du gaz de transport.

30. Dispositif suivant l'une des revendications 5 à 29, caractérisé en ce que le compresseur (7), la turbomachine (12) et le dispositif d'expansion (13) peuvent être couplés à un arbre commun (16).

31. Dispositif suivant l'une des revendications 5 à 30, caractérisé en ce que la vanne (10a), qui est agencée à la suite du dispositif d'expansion (13), est reliée au tuyau à gaz d'échappement (3) par l'intermédiaire d'un conduit tubulaire.

32. Dispositif suivant l'une des revendications 5 à 20, caractérisé en ce que des thermoéléments, des détecteurs de pression et/ou d'autres capteurs sont prévus pour procurer un signal de commande.

33. Dispositif suivant l'une des revendications 5 à 32, caractérisé en ce qu'un actionnement électrique, mécanique, pneumatique ou hydraulique des vannes (10, 10a) et de la vanne de la dérivation (15) de la turbomachine (12) est prévu.

34. Dispositif suivant l'une des revendications 5 à 33, caractérisé en ce que le dispositif entier est incorporé de manière isolée dans un logement en un matériau métallique ou non métallique.

35. Dispositif suivant l'une des revendications 5 à 34, caractérisé en ce que le dispositif de commande/réglage (17) fournit des grandeurs de sortie pour le réglage du moteur d'entraînement.
